Europäisches Patentamt

**European Patent Office**

**Office européen des brevets**

(19)

(11) Publication number: **0 148 537**

**B1**

(12)

# EUROPEAN PATENT SPECIFICATION

(45) Date of publication of patent specification: **18.05.88**

(51) Int. Cl.⁴: **A 01 F 15/10, A 01 D 90/02**

(21) Application number: **84201949.9**

(22) Date of filing: **28.12.84**

(54) Baler feeder mechanism.

(30) Priority: **09.01.84 US 569438**

(43) Date of publication of application:
**17.07.85 Bulletin 85/29**

(45) Publication of the grant of the patent:
**18.05.88 Bulletin 88/20**

(84) Designated Contracting States:
**DE FR GB**

(56) References cited:
**CH-A- 452 975
DE-B-1 224 083
FR-A-2 368 881
GB-A-1 130 761
GB-A-2 082 499**

(73) Proprietor: **NEW HOLLAND N.V.**
**Leon Claeysstraat 3a**
**B-8210 Zedelgem (BE)**

(72) Inventor: **Naaktgeboren, Adrianus**
**Vogelwikkestraat 7**
**B-8211 Veldegem (Zedelgem) (BE)**

(74) Representative: **Vandenbroucke, Alberic T.J.**
**et al**
**SPERRY NEW HOLLAND DIVISION OF SPERRY**
**N.V. Leon Claeysstraat, 3A**
**B-8210 Zedelgem (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 148 537 B1

## Description

This invention relates generally to agricultural balers and, in particular, to feeder mechanisms for such balers.

In a known, so-called large baler that includes a duct communicating at one end with an inlet opening in a bale case, one feeder mechanism is provided for packing crop material into the duct and another feeder mechanism is provided for stuffing crop material from the duct into the bale case via the inlet opening. U.S. Patent No. 4,034,543 discloses a baler of this type in which the feeder mechanism for packing is comprised of a plurality of fingers that extend from and retract into a rotatable drum, and the feeder mechanism for stuffing is comprised of a series of tines that oscillate in a kidney-shaped path of travel. Another baler of this type is disclosed in U.S. Patent No. 4,372,104 where the feeder mechanism for packing includes a plurality of prongs that move in an elliptical path of travel, and the feeder mechanism for stuffing includes a series of plates mounted on a rotatable tube. U.S. Patent No. 4,375,786 discloses a further baler of this type where the feeder mechanism for packing is formed by pushing members mounted on a rotatable disc, and the feeder mechanism for stuffing is formed by a rotatable flap member.

All the prior art feeder means referred to hereabove are especially adapted for use on so-called large square balers. As is generally known in the art, the conventional square balers widely used since many decades, typically make haybales weighing in the range of 20 to 35 kg. In contrast therewith the more recently introduced large square balers normally produce haybales weighing in the range of 200 to 400 kg. Some really giant square balers even are capable of producing haybales of up to one ton.

All the feeder mechanisms referred to hereabove have packer means and stuffer means which are spaced apart lengthwise of the feeder channel or duct and which are more or less independent from each other. Such multiple feeder means thus are quite voluminous and cumbersome and have many components, which in turn has a negative effect on the cost of the baler. For the same reasons the feeder channel is rather elongated, which possibly may present a problem under certain operating conditions to the extent that less than desirable feeding characteristics are obtained.

Some of the prior art packer and stuffer means together forming the multiple feeder means are fairly complicated in design and furthermore operate joltingly. Also the drive means therefore are quite complicated in design.

It is therefore an object of the present invention to provide an agricultural baler with a simple and compact feeder mechanism adapted to both pack crop material in a feeder channel and to stuff material from the feeder channel into the bale case on the one hand, and to provide a feeder mechanism with fewer components and which, moreover is able to operate smoothly and continuously on the other hand. The feeder according to the invention is particularly adapted for use on the so-called large square balers as identified above, although its application on conventional square balers equally may be advantageous, especially for increasing the capacity of such balers.

According to the present invention a baler is provided that includes:—

a bale case having an inlet opening formed in a wall thereof;

a plunger mounted for reciprocational movement within the bale case and back-and-forth across the inlet opening for compressing successive charges of crop material fed through said inlet opening in said bale case to form a bale; said plunger being disposed across said inlet opening during a portion of its reciprocation;

a feed duct communicating at one end with the inlet opening in the bale case and curving forwardly therefrom and terminating in an open crop receiving mouth; and

feed means cooperable with the feed duct and including packer means and stuffer means; said packer means being operable to pack crop material in the feed duct substantially while the plunger is disposed across the inlet opening in the bale case and said stuffer means being operable to stuff successive charges of crop material from the feed duct through the inlet opening into the bale case in timed sequence to the reciprocation of the plunger.

The invention is characterized in that:—

the packer means and the stuffer means, together forming said feed means, are mounted, generally diametrically opposite to each other, on a common mounting means; said feed means being rotatable around a first axis and further also being rotatable around a second axis which is offset relative to the first axis; and

the baler further also comprises:

. first drive means for rotating said feed means in one direction around said first axis in timed relationship to the reciprocation of the plunger and at a rotational speed corresponding either to twice the reciprocational speed of the plunger or to a multiple of twice this reciprocational speed of the plunger, dependent upon the length of the plunger crank arm;

. generally stationary means coaxially with the first axis; and

. further drive means drivingly coupling the feed means to the generally stationary means at a transmission ratio of 2:1 whereby, as the feed means is rotated around the first axis in said one direction, said further drive means causes said feed means to rotate in the opposite direction around said second axis; the arrangement being such that, for a given angular displacement of the feed means in the one direction around the first axis, said feed means is angularly displaced in the opposite direction around the second axis through an angle corresponding to half the given angular displacement around the first axis whereby the feed means makes a resultant movement in the first direction in timed relationship to the reciprocation of the plunger and whereby the packer means and the stuffer means of said feed means alternatively enter into and retract from the feed duct; said packer means being operative to pack crop material in the feed duct substantially when the plunger is disposed across the bale case inlet opening and while the stuffer means is retracted from the feed duct and said stuffer means being operative to stuff a charge of crop material through the inlet opening into the bale case when the plunger has cleared said inlet opening and while the packer means is retracted from the feed duct.

In other words, the invention provides a combined packing and stuffing feeder mechanism with the packing and stuffing means having substantially overlapping zones of operation even though the paths of movement of the outer ends of the packing and stuffing means are offset relative to each other. This is in contrast with the prior art structures where the packing and stuffing means are spaced apart lengthwise of the feeder duct.

A baler with a similar feeder mechanism is known from GB—A—2 082 499, but the feeder mechanism is used in a different way.

In one preferred embodiment, the feed means comprise a pair of transversely spaced apart shaft assemblies which are aligned to each other and which extend co-axially with the first axis. A crank means is coupled at one end to each of the shaft assemblies at the end thereof facing the opposite shaft assembly. Shaft means are supported by the crank means at the other ends thereof and co-axially with the second axis. These shaft means support the packing and stuffing means in a manner so as to be rotatable around the second axis.

The shaft means may be rotatably mounted on the crank means with the packing and stuffing means being fixedly coupled to the shaft means. The generally stationary means may be formed by a first sprocket fixedly secured to the frame. The further drive means drivingly coupling the feeder elements to the stationary means may be formed by a further sprocket fixedly secured to the shaft means and a chain drivingly extending around the first and further sprockets. The further sprocket has twice as many teeth as the first sprocket. The first drive means is operatively coupled to one of the shaft assemblies for driving the feed means in the first direction around the first axis.

A generally U-shaped counterbalancing member is fixedly connected to the shaft assemblies at a position generally diametrically opposite to the shaft means to counterbalance the packing and stuffing means and the shaft means.

According to an important characteristic of the invention, the stuffing means are longer than the packing means. Following another important characteristic, said stuffing and packing means are arranged to form an obtuse angle therebetween when seen in the first direction from the stuffing means to the packing means. Preferably, this obtuse angle is in the range of 150° to 170°. Still another important aspect of the invention is that only the stuffing means penetrate into the bale case.

The stuffing means is arranged to pack further crop material in the feeder duct in addition to the crop material previously packed therein by the packing means and prior to stuffing the crop material packed in the feeder duct from said duct into the bale case. The packing and stuffing means thus also serve to precompress crop material in the feeder duct.

In operation, the shaft assemblies are rotated through two complete 360° revolutions and cause the outer ends of the packing and stuffing means to make one complete cycle through their respective paths of movement while that the crank arm driving the baler plunger, makes only one complete 360° revolution.

The baler feeder mechanism according to the invention is particularly adapted for use in combination with a bottom fed bale case. To this end, the feeder duct is arranged to extend rearwardly and upwardly from a pick-up device and to communicate with an inlet opening in the bale case bottom wall. The feeder duct is generally circularly curved in shape with the center of curvature being either coincident with the first axis or positioned proximate thereto. During operation, the packing and stuffing means alternatively sweep through the feeder duct in the direction from the lower end thereof to the upper end thereof. While that the paths of movement of the outer ends of the packing and stuffing means are offset relative to each other as already specified, it is yet another important aspect of the feeder mechanism according to the invention that the sections of the feeder duct swept by the packing and stuffing means overlap each other to a substantial degree. Also the paths of movement of the packing and stuffing means intersect at a point located adjacent the lower end (inlet end) of the feeder duct.

Auger means may be disposed laterally of the feeder duct for moving crop material received from a pickup device to the feeder duct inlet end. The auger means may be connected to the shaft assemblies for rotation in unison therewith.

A baler in accordance with the present invention will now be described in greater detail by way of example, with reference to the accompanying drawings, in which:

Figure 1 is a partial side elevational view of a baler embodying the preferred embodiment of the feed means of the present invention;

Figure 2 is an enlarged sectional view taken along lines 2—2 in Figure 1;

Figure 3 is a sectional view taken along lines 3—3 in Figure 2; and

Figures 4—11 are somewhat schematic views taken at various stages during the operation of the baler of Figure 1.

In the following description, right hand and left hand references are determined by standing at the rear of the machine and facing in a direction of forward travel. Also, in the following description, it is to be understood that such terms as "forward", "rearward", "left", "right", "upwardly", etc. are words of convenience and are not to be construed as limiting terms.

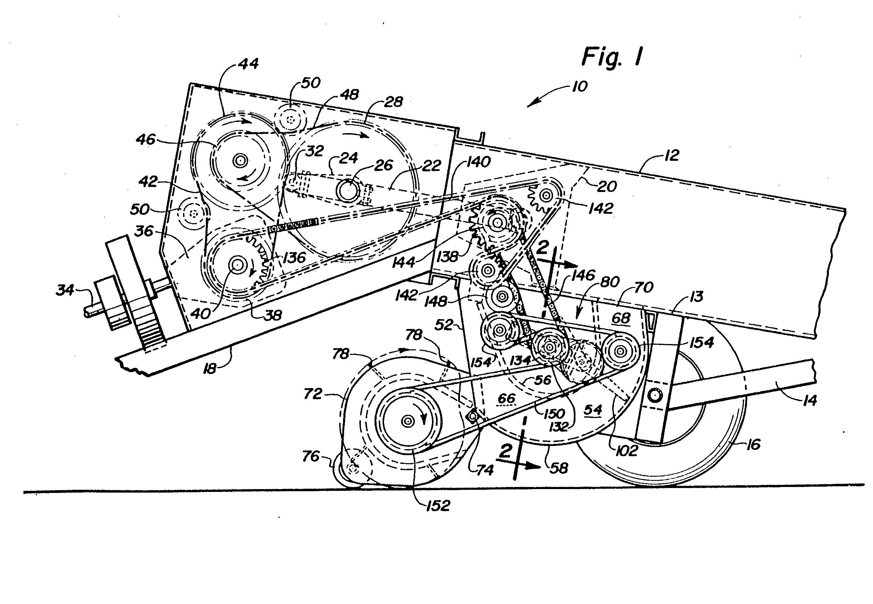

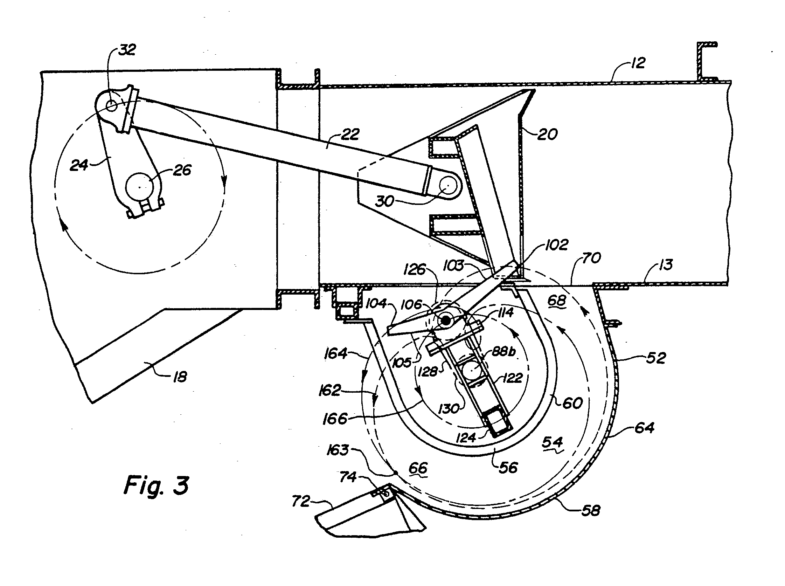

Referring to Figure 1, a baler 10 includes a bale case 12 mounted on a frame 14 which is supported by wheels 16. A tongue 18 extends forwardly from the bale case 12 for attachment to a tractor (not shown). A plunger 20 is reciprocably disposed in the bale case 12 to form crop material into rectangular bales. The plunger 20 is attached by a connecting rod 22 to a crank arm 24 fixed to a shaft 26 on which a sprocket 28 is fixedly mounted. As best shown in Figure 3, the connecting rod 22 has a pivotal connection 30 at one end with the plunger 20 and another pivotal connection 32 at the other end with the crank arm 24.

A drive shaft 34 is connected at one end to a gearbox 36 carried on the baler 10 and is adapted for connection at the other end to the PTO of a tractor (not shown). The drive shaft 34 causes clockwise rotation, as viewed in Figure 1, of a sprocket 38 which is fixed to the output shaft 40 of the gearbox 36. The sprocket 38 is connected via a chain 42 to a sprocket 44 of larger diameter. A sprocket 46 is fixed to rotate with the sprocket 44. This arrangement of sprockets provides a speed reduction from the sprocket 38 to the sprocket 46. A chain 48 connects the sprocket 46 to the sprocket 28 to cause clockwise rotation of the sprocket 28, as viewed in Figure 1 in order to cause reciprocation of the plunger 20 in a fore-and-aft direction in the bale case 12. Idlers 50 are provided to maintain proper tension in the chains 42 and 48.

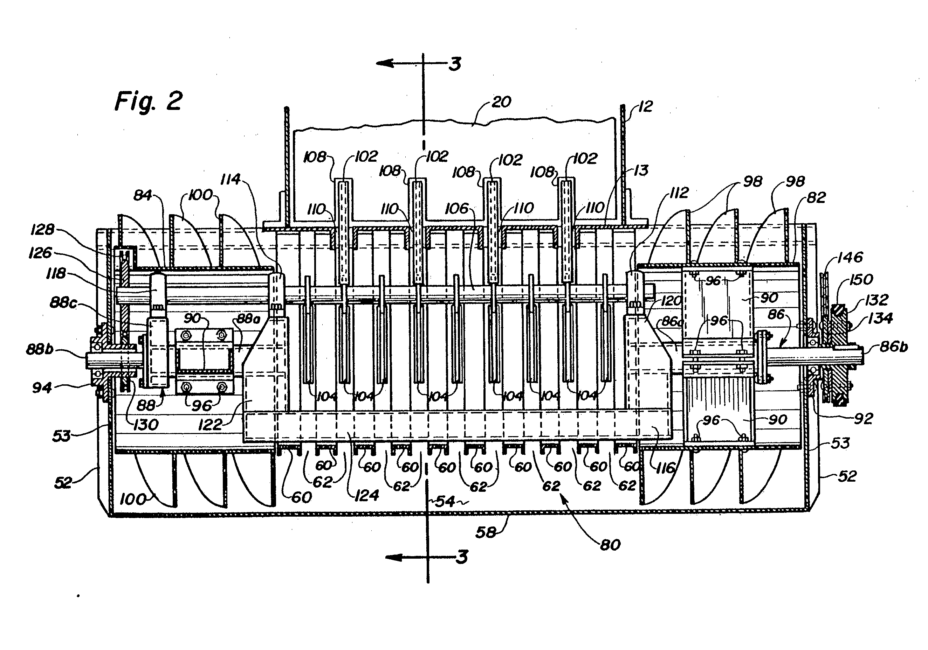

A feed chamber 52 is mounted underneath the base case 12 and includes a curved duct 54 having top and bottom walls 56 and 58, respectively, and sidewalls. As shown in Figure 2, the top wall 56 is formed of a series of curved channel members 60, of inverted generally U-shaped cross-section, which are arranged side-by-side so that there are slots 62 defined between adjacent channel members 60. The bottom wall 58 is formed primarily of a single curved, continuous panel member 64 as seen in cross-section in Figure 3. The curved duct 54 is open at its lower end 66 and at its upper end 68, and communicates at its upper end 68 with an inlet opening 70 formed in the bottom wall 13 of the bale case 12. A pickup device 72 of a conventional type is pivotally connected at 74 to the feed chamber 52 and is supported by wheels 76. The pickup device 72 includes a plurality of fingers 78 which are rotatable in the direction indicated in Figure 1 for lifting crop material from the ground and delivering it toward the feed chamber 52.

A feeder mechanism 80 is provided in the feed chamber 52 for moving crop material toward the lower end 66 of the duct 54, then through the duct 54 from its lower end 66 to its upper end 68, and then into the bale case 12 through the inlet opening 70 in the bottom wall 13 thereof. Referring now to Figure 2, it will be seen that the feeder mechanism 80 includes augers 82 and 84 mounted on beam portions 86a and 88a of shaft assemblies 86 and 88, respectively, by spider type brackets 90. These beam portions 86a, 88a are preferably of generally square cross-section and the brackets 90 are clamped thereto. Stub shaft portions 86b, 88b of the shaft assemblies 86, 88 are rotatably mounted in bearing members 92, 94 which are secured to the sidewalls 53 of the feed chamber 52. The beam portion 86a and the stub shaft portion 86b of the shaft assembly 86 are rigidly connected together. Likewise, the beam portion 88a and the stub shaft portion 88b of the shaft assembly 88 are also rigidly connected together. The brackets 90 are detachably connected to the augers 82, 84 and to the shaft assemblies 86, 88 by using conventional fasteners such as bolts 96 to permit removal of the augers 82, 84 in sections, if desired, to facilitate servicing of the feeder mechanism 80. The augers 82, 84 have the flighting 98, 100 thereof arranged to move crop material from the outer regions of the feed chamber 52 inwardly toward the lower end 66 of the duct 54.

The feeder mechanism 80 also includes two sets of feeder elements or tines 102, 104 fixed to a shaft 106 as best seen in Figure 2 with the tines 102, 104 arranged to project through the slots 62 in the top wall 56 of the duct 54. The tines 102 are preferably longer than the tines 104. Only the tines 102, and not the tines 104, will pass through slots 108 formed in the plunger 20 and through slots 110 formed in the bottom wall 13 of the bale case 12. Preferably, the number of tines 104 is about twice the number of tines 102. Alternatively, however, either the tines 104 located directly opposite the tines 102 or the tines 104 located between the tines 104 directly opposite the tines 102 may be eliminated. The shaft 106 is rotatably mounted in bearing blocks 112, 114 which are secured to a substantially U-shaped frame 116. The shaft 106 is also rotatably mounted in a bearing block 118 which is secured to a hub portion 88c of the shaft assembly 88. The frame 116 includes two leg portions 120, 122 which are rigidly connected such as by welding to the beam portions 86a, 88a of the shaft assemblies 86, 88. The frame 116 also includes a bight portion 124 extending between and rigidly connected at its ends to the leg portions 120, 122. A sprocket 126 fixed to the shaft 106 is connected by a chain 128 to a sprocket 130 fixed on the bearing member 94. The sprocket 126 has twice as many teeth as the sprocket 130. During operation of the feeder mechanism 80, the sprocket 130 remains stationary but the sprocket 126 and the shaft 106 orbit about the sprocket 130 in one direction which causes the shaft 106 to rotate in the opposite direction in and relative to the bearing blocks 112, 114, 118. A sheave 132 is fixed to the stub shaft portion 86b of the shaft assembly 86, and a sprocket 134 is fixed to the sheave 132.

Referring now to Figure 1, a sprocket 136 fixed to rotate with the sprocket 38 is connected to a sprocket 138 mounted on the side of the bale case 12 by a chain 140 in a backwrap manner to cause rotation of the sprocket 138 in a counterclockwise direction as indicated. The chain 140 also extends around idlers 142. Another sprocket 144 fixed to rotate with the sprocket 138 is connected by a chain 146 to the sprocket 134 to cause counterclockwise rotation of the sprocket 134 and thus operation of the feeder mechanism 80. An idler 148 maintains tension in the chain 140. A belt 150 extends around the sheave 132 in a backwrap manner and around another sheave 152 on the pickup device 72 to rotate the sheave 152 in a clockwise direction and thus operate the pickup device 72. The belt 150 also extends around idlers 154, the forward one of which is preferably spring loaded to allow vertical movement of the pickup device 72 and to allow the belt 150 to slip if the pickup device is overloaded.

Referring to Figure 3, it will be seen that the sets of tines 102 and 104 are mounted on the shaft 106 so that there is an obtuse angle between the leading edges 103 of the tines 102 and the leading edges 105 of the tines 104 when measured in a counterclockwise direction from the tines 102 to the tines 104. This obtuse angle is preferably in the range of 150° to 170°. In a preferred embodiment, this angle is 157.5°. As the feeder mechanism 80 operates, the sets of tines 102, 104 are each rotated in a counterclockwise direction about the axis extending longitudinally through the shaft assemblies 86, 88 and simultaneously in a clockwise direction about the axis extending through the centers of the bearing blocks 112, 114, 118. This causes the outer ends of the tines 102 to follow a path of movement designated 162 and the outer ends of the tines 104 to follow a path of movement designated 164. These paths of movement 162, 164 are offset relative to each other but they intersect at a point 163 located adjacent the lower end 66 of the duct 54. Only the path of movement 162 passes through the bale case 12. The paths of movement 162, 164 are generally apple-shaped because the sprocket 126 driving the tines 102, 104 orbits about the stationary sprocket 130 via the chain 128 and has twice as many teeth as the sprocket 130. For two complete revolutions as viewed in Figure 3, i.e., 720° of rotation, of the sprocket 126 and the shaft 106 about the sprocket 130 in a counterclockwise direction, the sprocket 126 and the shaft 106 make one complete revolution, i.e., 360° of rotation, in a clockwise direction relative to the bearing blocks 112, 114, 118. The axis of the shaft 106 follows a path of movement 166 which is circular in shape. The center of rotation for the paths of movement 162, 164, 166 coincides with the axis extending longitudinally through the shaft assemblies 86, 88. During the operation of the feeder mechanism 80, the frame 116 is also rotated and the weight of the bight portion 124 thereof serves to counterbalance the weight of the tines 102, 104 and the weight of the shaft 106.

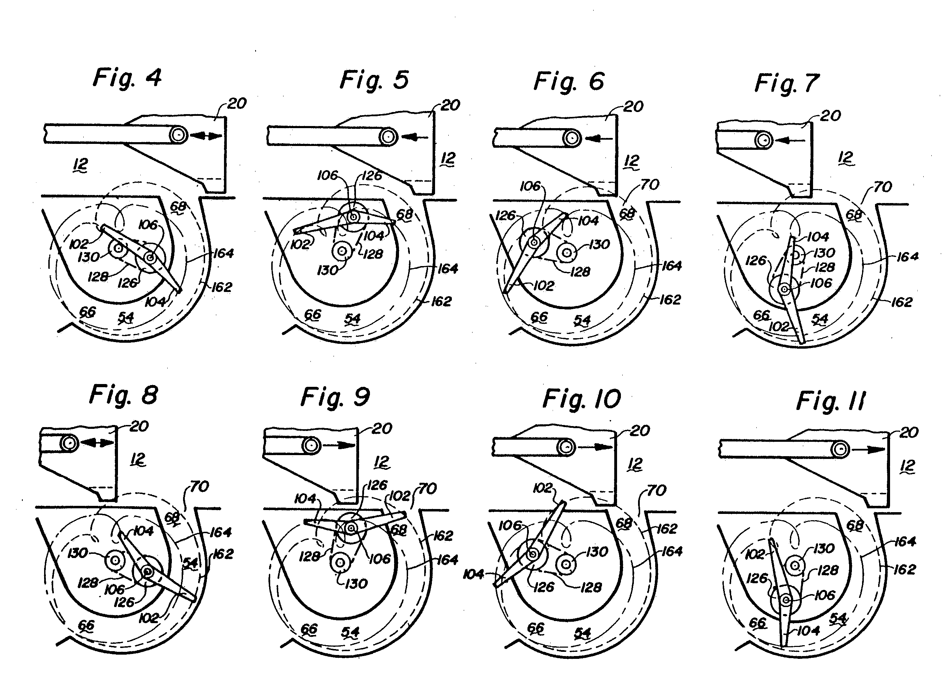

The operation of the feeder mechanism 80 is best understood from Figures 4—11. The plunger 20 is shown in Figure 4 at the end of its rearward movement in the bale case 12, and the tines 104 are shown projecting into the duct 54 to pack crop material therein while the tines 102 are in an inoperative position. In Figure 5, the plunger 20 is starting to move forward in the bale case 12, i.e. to retract and the tines 104 are completing the packing of crop material into the duct 54 while the tines 102 are still in an inoperative position. The plunger 20 continues its forward movement in Figure 6, and the tines 102 start to move into the lower end 66 of the duct 54 while that the tines 104 are now located in an inoperative position. In Figure 7, the plunger 20 continues to move forward and the tines 102 project into the duct 54 engaging the crop material previously packed therein by the tines 104 as well as any new material entering the duct 54. The plunger 20 completes its forward or retracting movement in Figure 8, and the tines 102 continue to move through the duct 54 toward its upper end 68 thereby precompressing the material in the duct 54. In Figure 9, the plunger 20 begins to move rearward in the bale case 12 i.e. the plunger 20 begins its compacting stroke. The tines 102 stuff material upwardly from the duct 54 into the bale case 12 through the inlet opening 70 in the bottom wall 13 thereof. As the plunger 20 moves rearwardly from the position shown in Figure 9 to the position shown in Figure 10, the tines 102 pass through the slots 108 in plunger 20 and through the slots 110 in the bottom wall 13 of the bale case 12. This combs off the tines 102 as they retract from the bale case 12. In Figure 11, the plunger 20 continues its rearward movement to compress the material delivered to the bale case 12 into a bale, and the tines 104 start to pack new material into the duct 54 again, without however stuffing this material in the bale case 12. This stuffing is done solely by the tines 102.

It will be understood that in the preferred embodiment of the baler 10 disclosed herein, the feeder mechanism 80 is driven twice the speed of the plunger 20 which causes one packing stroke by the tines 104 and one stuffing stroke by the tines 102 for each complete stroke of the plunger 20. However, the baler 10 could be modified so that there would be, for example, two packing strokes by the tines 104 and two stuffing strokes by the tines 102 for each stroke of the plunger 20. This modification could be accomplished by simply increasing the length of the crank arm 24 which would thereby increase the length of the stroke of the plunger 20 and by driving the feeder mechanism 80 four times the speed of the plunger 20.

From what precedes, it will be seen that a simple and compact feeder mechanism is provided which nevertheless is particularly useful on a so-called large rectangular baler of the type as specified. While that basically a single, though combined, feeder mechanism with associated drive means is provided, the structure according to the invention nevertheless provides during operation, distinct packing and stuffing strokes, which helps to improve the crop feeding characteristics. Furthermore, the feeder means according to the invention has fewer components and the feeder duct is shorter than is conventional on the type of balers for which the structure according to the invention is intended in the first place. This feeder mechanism also provides, during operation, pre-compression of the crop material in the feeder duct, as is desirable.

The combined packer and stuffer means of the feeder mechanism according to the invention, are of the rotary type which guarantee a smooth and continuous operation thus avoiding the joltingly type of operation of some of the prior art structures. Finally, while that the subject invention is primarily intended for use on so-called large rectangular balers, it also advantageously may be used on the conventional (smaller) rectangular balers for increasing the capacity thereof.

## Claims

1. A baler (10) comprising:—
a bale case (12) having an inlet opening (70) formed in a wall (13) thereof;
a plunger (20) mounted for reciprocational movement within the bale case (12) and back-and-forth across the inlet opening (70) for compressing successive charges of crop material fed through said inlet opening (70) in said bale case (12) to form a bale; said plunger (20) being disposed across said inlet opening (70) during a portion of its reciprocation;
a feed duct (54) communicating at one end (68) with the inlet opening (70) in the bale case (12) and curving forwardly therefrom and terminating in an open crop receiving mouth (66); and
feed means (104, 102) cooperable with the feed duct (54) and including packer means (104) and stuffer means (102); said packer means (104) being operable to pack crop material in the feed duct (54) substantially while the plunger (20) is disposed across the inlet opening (70) in the bale case (12) and said stuffer means (102) being operable to stuff successive charges of crop material from the feed duct (54) through the inlet opening (70) into the bale case (12) in timed sequence to the reciprocation of the plunger (20) characterized in that:—
the packer means (104) and the stuffer means (102), together forming said feed means (104, 102) are mounted generally diametrically opposite to each other, on a common mounting means (106); said feed means (104, 102) being rotatable around a first axis (86ab, 88ab) and further also being rotatable around a second axis (106) which is offset relative to the first axis (86ab, 88ab); and
the baler (10) further also comprises:
. first drive means (34, 36, 136, 140, 138, 144, 146, 134) for rotating said feed means (104, 102) in one direction around said first axis (86ab, 88ab) in timed relationship to the reciprocation of the plunger (20) and at a rotational speed corresponding either to twice the reciprocational speed of the plunger (20) or to a multiple of twice this reciprocational speed of the plunger (20), dependent upon the length of the plunger crank arm (24);
. generally stationary means (130) coaxially with the first axis (86ab, 88ab); and
. further drive means (128, 126) drivingly coupling the feed means (104, 102) to the generally stationary means (130) at a transmission ratio of 2:1 whereby, as the feed means (104, 102) is rotated around the first axis (86ab, 88ab) in said one direction, said further drive means (128, 126) causes said feed means (104, 102) to rotate in the opposite direction around said second axis (106); the arrangement being such that, for a given angular displacement of the feed means (104, 102) in the one direction around the first axis (86ab, 88ab), said feed means (104, 102) is angularly displaced in the opposite direction around the second axis (106) through an angle corresponding to half the given angular displacement around the first axis (86ab, 88ab) whereby the feed means (104, 102) makes a resultant movement in the first direction in timed relationship to the reciprocation of the plunger (20) and whereby the packer means (104) and the stuffer means (102) of said feed means (104, 102) alternatively enter into and retract from the feed duct (54); said packer means (104) being operative to pack crop material in the feed duct (54) substantially when the plunger (20) is disposed across the bale case inlet opening (70) and while the stuffer means (102) is retracted from the feed duct (54) and said stuffer means (102) being operative to stuff a charge of crop material through the inlet opening (70) into the bale case (12) when the plunger (20) has cleared said inlet opening (70) and while the packer means (104) is retracted from the feed duct (54).

2. A baler according to Claim 1 characterized in that the packing means (104) and the stuffing means (102) are arranged so that there is an obtuse angle therebetween when seen in the first direction from the stuffing means (102) to the packing means (104) whereby the paths of movement (164, 162) of respectively the packing means (104) and the stuffing means (102) are offset relative to each other.

3. A baler according to Claim 2 characterized in that the obtuse angle is in the range of 150° to 170°.

4. A baler according to Claim 2 or 3 characterized in that the paths of movement (164, 162) of the packing means (104) and stuffing means (102) are generally apple-shaped.

5. A baler according to any of the preceding claims characterized in that the packing means (104) and stuffing means (104) are in the form of packing and stuffing tines, with the stuffing tines (102) being longer than the packing tines (104).

6. A baler according to any one of the Claims 2 to 5 characterized in that, during operation, only the stuffing means (102) penetrate into the bale case (12).

7. A baler according to any of the Claims 3 to 6 when appended to Claim 2 characterized in that the paths of movement (164, 162) of the packing means (104) and stuffing means (102) intersect each other at a point (163) located adjacent the crop receiving mouth (66) of the feed duct (54).

8. A baler according to any of the preceding claims characterized in that, in operation, the stuffing means (102) is operable to pack further crop material in the feed duct (54) in addition to the crop material previously packed therein by the packing means (104) and prior to stuffing the crop material packed in the feed duct (54) from said feed duct (54) into the bale case (12).

9. A baler according to any of the preceding claims characterized in that the packing and stuffing means (104, 102) also serve to precompress crop material in the feed duct (54).

10. A baler according to any of the preceding claims wherein the bale case (12) has a bottom wall (13) in which the inlet opening (70) is formed; wherein the feed duct (54) has an upper end (68) facing generally upwardly and communicating with the inlet opening (70) in the bale case (12) and a lower crop receiving mouth (66) facing generally in a forward direction; and wherein a pick-up means (72) is provided adjacent the lower end (66) of the feed duct (54) for picking up crop material from the ground and delivering it toward the feed means (104, 102); and characterized in that the feed duct (54) is generally circularly curved in shape with the center of curvature being either co-incident with the first axis (86ab, 88ab) or positioned proximate thereto, and in that, during operation, the packer means (104) and stuffer means (102) alternatively move through the feed duct (54) in the direction from the lower end (66) toward the upper end (68).

11. A baler according to Claim 8 characterized in that auger means (82, 84) are disposed laterally of the feed duct (54) for moving crop material toward the lower crop receiving mouth (66) thereof.

12. A baler according to any of the preceding claims characterized in that it further also comprises;

a pair of transversely spaced apart shaft assemblies (86, 88) which are aligned to each other and which extend coaxially with the first axis (86ab, 88ab), and

a crank means (120, 122) coupled, at one end to each one of the shaft assemblies (86, 88) at the end thereof facing the opposite shaft assembly (88, resp. 86); said crank means (120, 122) supporting, at their other ends, the common mounting means (106) for the packing means (104) and stuffing means (102) for rotational movement around the second axis (106).

13. A baler according to Claim 12, characterized in that:—

the generally stationary means (130) is formed by a first sprocket (130) fixedly secured to the frame (14);

the further drive means (128, 126) drivingly coupling the feed means (104, 102) to the generally stationary means (130) is formed by a further sprocket (126) fixedly secured to the common mounting means (106) and a chain (128) drivingly extending around the first and further sprockets (130, 126); the further sprocket (126) having twice as many teeth as the first sprocket (130); and

the first drive means (34, 36, 136, 140, 138, 144, 146, 134) is operatively coupled to one of the shaft assemblies (86) for driving the feed means (104, 102) in the first direction around the first axis (86ab, 88ab).

14. A baler according to Claim 13, characterized in that a generally U-shaped counterbalancing member (116) is fixedly connected to the shaft assemblies (86, 88) at a position generally diametrically opposite to the common mounting means (106) to counterbalance this common mounting means (106) and the packer means (104) and stuffer means (102) mounted thereon.

15. A baler according to Claim 13 or 14 and which further also comprises a rotatable crank arm (24) connected to the plunger (20) for causing reciprocation thereof in the bale case (12) and wherein the first drive means (34, 36, 136, 140, 138, 144, 146, 134) is operable to also rotate said crank arm (24), and characterized in that: said first drive means (34, 36, 136, 138, 144, 146) is operable to rotate the shaft assemblies (86, 88) through two complete 360° revolutions and to cause the packing means (104) and stuffing means (102) to make one complete cycle through their respective paths of movement (164, 162) while that the crank arm (24) makes one complete 360° revolution.

16. A baler according to any of the Claims 12 to 15 when appended to Claim 11 characterized in that the auger means (82, 84) are connected to the shaft assemblies (86, 88) for rotation in unison therewith.

**Patentansprüche**

1. Ballenpresse (10) mit:—
einer Ballenkammer (12), die eine Einlaßöffnung (70) aufweist, die in einer Wand (13) der Ballenkammer ausgebildet ist,

mit einem Preßkolben (20), der in der Ballenkammer (12) für eine Hin- und Herbewegung rückwärts und vorwärts über die Einlaßöffnung (70) hinweg befestigt ist, um aufeinanderfolgende Ladungen des Erntematerials zu komprimieren, das durch die Einlaßöffnung (70) in die Ballenkammer (12) eingeleitet wird, um einen Ballen zu bilden, wobei der Preßkolben (20) während eines Teils seiner Hin- und Herbewegung über der Einlaßöffnung (70) angeordnet ist,

einem Zuführungskanal (54), der an einem Ende (68) mit der Einlaßöffnung (70) in der Ballenkammer (12) in Verbindung steht und von dieser aus nach vorne gekrümmt ist und in einer offenen, das Erntematerial aufnehmenden Mündung (66) endet, und

Zuführungseinrichtungen (104, 102), die mit dem Zuführungskanal (54) zusammenwirken und Packeinrichtungen (104) und Stopfeinrichtungen (102) einschließen, wobei die Packeinrichtungen (104) so betätigbar sind, daß sie Erntematerial in dem Zuführungskanal (54) im wesentlichen dann zusammenpacken, wenn der Preßkolben über der Einlaßöffnung (70) in der Balenkammer (12) angeordnet ist, während die Stopfeinrichtungen (102) so betätigbar sind, daß sie aufeinanderfolgende Ladungen des Erntematerials von dem Zuführungskanal (54) durch die Einlaßöffnung (70) in die Ballenkammer (12) in zeitlich gesteuerter Folge zur Hin- und Herbewegung des Preßkolbens (20) stopfen, dadurch gekennzeichnet, daß die Packeinrichtungen (104) und die Stopfeinrichtungen (102), die zusammen die Zuführungseinrichtungen (104, 102) bilden, allgemein diametral entgegengesetzt zueinander auf einer gemeinsamen Befestigungseinrichtung (106) befestigt sind, daß die Zuführungseinrichtungen (104, 102) um eine erste Achse (86ab, 88ab) und außerdem um eine zweite Achse (106) drehbar sind, die gegenüber der ersten Achse (86ab, 88ab) versetzt ist, und daß die Ballenpresse (10) weiterhin folgende Teile umfaßt:

. erste Antriebseinrichtungen (34, 36, 136, 140, 138, 144, 146, 134) zum Drehen der Zuführungseinrichtungen (104, 102) in einer Richtung um die erste Achse (86ab, 88ab) in zeitlich gesteuerter Beziehung zur Hin- und Herbewegung des Preßkolbens (20) und mit einer Drehgeschwindigkeit, die entweder dem Doppelten der Hin- und Herbewegungsgeschwindigkeit des Preßkolben (20) oder einem Vielfachen des Doppelten dieser Hin- und Herbewegungsgeschwindigkeit des Preßkolbens (20) entspricht, und zwar in Abhängigkeit von der Länge des Preßkolben-Kurbelarms (24),

. allgemein stationäre Einrichtungen (130), die koaxial zur ersten Achse (86ab, 88ab) angeordnet sind, und

. weitere Antriebseinrichtung (128, 126), die antriebsmäßig die Zuführungseinrichtungen (104, 102) mit den allgemein stationären Einrichtungen (130) mit einem Übersetzungsverhältnis von 2:1 koppeln, wenn die Zuführungseinrichtungen (104, 102) um die erste Achse (86ab, 88ab) in der genannten einen Richtung gedreht werden, wobei die weiteren Antriebseinrichtungen (128, 126) bewirken, daß die Zuführungseinrichtungen (104, 102) in der entgegengesetzten Richtung um die zweite Achse (106) rotieren, wobei die Anordnung derart ist, daß für eine vorgegebene Winkelbewegung der Zuführungseinrichtungen (104, 102) in der genannten einen Richtung um die erste Achse (86ab, 88ab) die Zuführungseinrichtung (104, 102) winkelmäßig in der entgegengesetzten Richtung um die zweite Achse (106) über einen Winkel bewegt wird, der der halben vorgegeben Winkelbewegung um die erste Achse (86ab, 88ab) entspricht, wodurch die Zuführungseinrichtung (104, 102) ein resultierende Bewegung in der ersten Richtung in zeitlich gesteuerter Beziehung zur Hin- und Herbewegung des Preßkolbens (20) ausführt und wodurch die Packeinrichtungen (104) und die Stopfeinrichtungen (102) der Zuführungseinrichtungen (104, 102) abwechselnd in den Zuführungskanal (54) eintreten und sich aus diesem zurückziehen, und wobei die Packeinrichtungen (104) so betätigbar sind, daß sie Erntematerial in dem Zuführungskanal (54) im wesentlichen dann zusammenpacken, wenn der Preßkolben (20) über der Ballenkammer-einlaßöffnung (70) angeordnet ist und während die Stopfe inrichtung (102) aus dem Zuführungskanal (54) herausgezogen ist, während die Stopfeinrichtung (102) so betätigbar ist, daß sie eine Ladung des Erntematerials durch die Einlaßöffnung (70) in die Ballenkammer (20) stopft, wenn der Preßkolben (20) die Einlaßöffnung (70) freigegeben hat und während die Packeinrichtung (104) aus dem Zuführungskanal (54) zurückgezogen ist.

2. Ballenpresse nach Anspruch 1, dadurch gekennzeichnet, daß die Packeinrichtung (104) und die Stopfeinrichtung (102) derart angeordnet sind, daß ein stumpfer Winkel zwischen diesen bei Betrachtung in der ersten Richtung von der Stopfeinrichtung (102) zur Packeinrichtung (104) liegt, so daß die Bewegungsbahnen (164, 162) der Packeinrichtung (104) bzw. der Stopfeinrichtung (102) relativ zueinander versetzt sind.

3. Ballenpresse nach Anspruch 2, dadurch gekennzeichnet, daß der stumpfe Winkel im Bereich von 150 Grad bis 170 Grad liegt.

4. Ballenpresse nach Anspruch 2 oder 3, dadurch gekennzeichnet, daß die Bewegungsbahnen (164, 162) der Packeinrichtung (104) und der Stopfeinrichtung (102) allgemein apfelförmig sind.

5. Ballenpresse nach einem der vorhergehenden Ansprüche, dadurch gekennzeichnet, daß die Packeinrichtung (104) und die Stopfeinrichtung (102) die Form von Pack- und Stopfzinken haben, wobei die Stopfzinken (102) länger als die Packzinken (104) sind.

6. Ballenpresse nach einem der Ansprüche 2—5, dadurch gekennzeichnet, daß während des Betriebs lediglich die Stopfeinrichtungen (102) in die Ballenkammer (12) eintreten.

7. Ballenpresse nach einem der Ansprüche 3—6 unter Rückbeziehung auf Anspruch 2, dadurch gekennzeichnet, daß die Bewegungsbahnen (164, 162) der Packeinrichtungen (104) und der Stopfeinrichtungen (102) einander an einem Punkt (163) schneiden, der benachbart zur Ernteaufnahmemündung (66) des Zuführungskanals (54) liegt.

8. Ballenpresse nach einem der vorhergehenden Ansprüche, dadurch gekennzeichnet, daß im Betrieb die Stopfeinrichtung (102) derart betätigbar ist, daß sie weiteres Erntematerial in den Zuführungskanal (54) zusätzlich zu dem vorher darin durch die Packeinrichtung (104) gepackten Material und vor dem Stopfen des in dem Zuführungskanal (54) gepackten Erntematerials von dem Zuführungskanal (54) in die Ballenkammer (12) packt.

9. Ballenpresse nach einem der vorhergehenden Ansprüche, dadurch gekennzeichnet, daß die Pack- und Stopfeinrichtungen (104, 102) außerdem zur Vorkomprimierung des Erntematerials in dem Zuführungskanal dienen.

10. Ballenpresse nach einem der vorhergehenden Ansprüche, bei der die Ballenkammer (12) eine Bodenwand (13) aufweist, in der die Einlaßöffnung (70) ausgebildet ist, bei der der Zuführungskanal (54) ein allgemein nach oben gerichtetes und mit der Einlaßöffnung (70) in der Ballenkammer (12) in Verbindung stehendes Ende (68) und eine untere, Erntematerial aufnehmende Mündung (66) aufweist, die allgemein in Vorwärtsrichtung gerichtet ist, und bei der eine Aufnahmeeinrichtung (72) benachbart zum unteren Ende (66) des Zuführungskanals (54) angeordnet ist, um Erntematerial vom Boden aufzunehmen und es in Richtung auf die Zuführungseinrichtungen (104, 102) zuzuführen, dadurch gekennzeichnet, daß der Zuführungskanal (54) allgemein eine kreisförmig gekrümmte Form aufweist, wobei der Krümmungsmittelpunkt entweder mit der ersten Achse (86ab, 88ab) zusammenfällt oder in geringem Abstand hiervon angeordnet ist, und daß während des Betriebs die Packeinrichtung (104) und die Stopfeinrichtung (102) sich abwechselnd durch den Zuführungskanal (54) in Richtung von deren unterem Ende (66) in Richtung auf das obere Ende (68) bewegen.

11. Ballenpresse nach Anspruch 8, dadurch gekennzeichnet, daß Schneckenfördereinrichtungen (82, 84) seitlich von dem Zuführungskanal (54) angeordnet sind, um Erntematerial in Richtung auf die untere, Erntematerial aufnehmende Mündung (66) des Zuführungskanals zu bewegen.

12. Ballenpresse nach einem der vorhergehenden Ansprüche, dadurch gekennzeichnet, daß sie weiterhin zwei mit Querabstand angeordnete Wellenbaugruppen (86, 88) aufweist, die miteinander ausgerichtet sind, und die sich koaxial zur ersten Achse (86ab, 88ab) erstrecken, und daß eine Kurbeleinrichtung (120, 122) vorgesehen ist, die an einem Ende mit jeder der Wellenbaugruppen (86, 88) an dem Ende gekoppelt ist, das auf die gegenüberliegende Wellenbaugruppe (88 bzw. 86) gerichtet ist, wobei die Kurbeleinrichtungen (120, 122) an ihren anderen Enden die gemeinsamen Befestigungseinrichtungen (106) für die Packeinrichtungen (104) und die Stopfeinrichtungen (102) für eine Drehbewegung um die zweite Achse (106) haltern.

13. Ballenpresse nach Anspruch 12, dadurch gekennzeichnet, daß die allgemein stationären Einrichtungen (130) durch ein erstes Kettenrad (130) gebildet sind, das fest an dem Rahmen (14) befestigt ist, daß die weiteren Antriebseinrichtungen (128, 126), die die Zuführungseinrichtungen (104, 102) antriebsmäßig mit den allgemein stationären Einrichtungen (130) koppeln, durch ein weiteres Kettenrad (126), des fest an den gemeinsamen Befestigungseinrichtungen (106) befestigt ist, und eine Kette (128) gebildet sind, die sich antriebsmäßig um das erste und das weitere Kettenrad (130, 126) erstreckt, daß das weitere Kettenrad (126) doppelt so viele Zähne wie das erste Kettenrad (130) aufweist, und daß die erste Antriebseinrichtung (34, 36, 136, 140, 138, 144, 146, 134) betriebsmäßig mit einer der Wellenbaugruppen (86) gekoppelt ist, um die Zuführungseinrichtungen (104, 102) in der ersten Richtung um die erste Achse (86ab, 88ab) anzutreiben.

14. Ballenpresse nach Anspruch 13, dadurch gekennzeichnet, daß ein allgemein U-förmiges Auswuchtelement (116) fest an den Wellenbaugruppen (86, 88) an einer Position befestigt ist, die diametral gegenüberliegend zu den gemeinsamen Befestigungseinrichtungen (106) liegt, um diese gemeinsamen Befestigungseinrichtungen (106) und die daran befestigten Packeinrichtungen (104) und Stopfeinrichtungen (102) auszubuchten.

15. Ballenpresse nach Anspruch 13 oder 14, die weiterhin einen drehbaren Kurbelarm (24) aufweist, der mit dem Preßkolben (20) verbunden ist, um dessen Hin- und Herbewegung in der Ballenkammer (12) hervorzurufen, und bei dem die ersten Antriebseinrichtungen (34, 36, 136, 140, 138, 144, 146, 134) so betätigbar sind, daß sie außerdem den Kurbelarm (24) in Drehung versetzen, dadurch gekennzeichnet, daß die ersten Antriebseinrichtungen (34, 36, 136, 138, 144, 146) so betätigbar sind, daß sie die Wellenbaugruppen (86, 88) über zwei vollständige 360 Grad-Umdrehungen drehen und bewirken, daß die Packeinrichtung (104) und die Stopfeinrichtung (102) einen vollständigen Zyklus über ihre jeweiligen Bewegungsbahnen (164, 162) ausführen, während der Kurbelarm (24) eine vollständige 360 Grad-Umdrehung ausführt.

16. Ballenpresse nach einem der Ansprüche 12—15 unter Rückbeziehung auf Anspruch 12, dadurch gekennzeichnet, daß die Schneckenfördereinrichtungen (82, 84) mit den Wellenbaugruppen (86, 88) für eine gemeinsame Drehung verbunden sind.

**Revendications**

1. Ramasseuse-presse (10) comportant:—

un carter de ramasseuse-presse (12) qui présente, défini dans sa paroi (13), un orifice d'entrée (70);

un piston (20) monté en vue d'opérer un mouvement alternatif à l'intérieur du carter de ramasseuse-presse (12) et de va-et-vient transversalement à l'orifice d'entrée (70) pour comprimer des fournées successives de produits de récolte chargés à travers ledit orifice d'entrée (70) dans ledit carter de ramasseuse-presse (12), afin de former une balle; ledit piston (20) étant positionné transversalement audit orifice d'entrée (70) pendant une partie de son mouvement alternatif;

un conduit d'alimentation (54) qui communique, au niveau de l'une (68) de ses extrémités, avec l'orifice d'entrée (70) dans le carter de ramasseuse-presse (12) et se courbe vers l'avant à partir de celui-ci pour se terminer par une ouverture de réception de produits de récolte (66) ouverte; et

des moyens d'alimentation (104, 102) aptes à coopérer avec le conduit d'alimentation (54) et comprenant un moyen de compactage (104) et un moyen de bourrage (102); ledit moyen de compactage (104) étant apte à opérer pour compacter les produits de récolte dans le conduit d'alimentation (54), sensiblement pendant que le piston (20) se trouve positionné transversalement à l'orifice d'entrée (70) dans le carter de ramasseuse-presse (12), tandis que ledit moyen de bourrage (102) est apte à opérer pour bourrer des fournées successives de produits de récolte depuis le conduit d'alimentation (54) à travers l'orifice d'entrée (70) dans le carter de ramasseuse-presse (12), suivant une séquence synchronisée avec le mouvement alternatif du piston (20) caractérisée en ce que:

le moyen de compactage (104) et le moyen de bourrage (102), qui forment conjointement lesdits moyens d'alimentation (104, 102), sont montés, dans l'ensemble d'une manière diamétralement opposée l'un par rapport à l'autre, sur un moyen de montage commun (106); lesdits moyens d'alimentation (104, 102) étant mobiles en rotation autour d'un premier axe (86ab, 88ab) et également autour d'un second axe (106) décalé par rapport au premier axe (86ab, 88ab); et

la ramasseuse-presse (10) comporte, en outre:

. des premiers moyens d'entraînement (34, 36, 136, 140, 138, 144, 146, 134) destinés à faire tourner lesdits moyens d'alimentation (104, 102) dans un sens autour dudit premier axe (86ab, 88ab), dans une relation synchronisée avec le mouvement alternatif du piston (20) et à une vitesse de rotation correspondant à deux fois la vitesse de mouvement alternatif du piston (20) ou à un multiple de deux fois cette vitesse de mouvement alternatif du piston (20), en fonction de la longueur du bras de manivelle de piston (24);

. un moyen sensiblement fixe (130) disposé coaxialement au premier axe (86ab, 88ab); et

. des seconds moyens d'entraînement (128, 126) qui accouplent, en vue de leur entraînement, les moyens d'alimentation (104, 102) avec le moyen sensiblement fixe (130) suivant un rapport de transmission égal à 2:1, moyennant quoi, lorsque les moyens d'alimentation (104, 102) sont animés d'un mouvement de rotation autour du premier axe (86ab, 88ab) dans ledit sens, lesdits seconds moyens d'entraînement (128, 126) obligent lesdits moyens d'alimentation (104, 102) à tourner dans le sens opposé autour dudit second axe (106); la disposition étant telle qu'à un déplacement angulaire donnée des moyens d'alimentation (104, 102) dans ledit sens autour du premier axe (86ab, 88ab) correspond un déplacement angulaire de ceux-ci dans le sens opposé autour du second axe (106) suivant un angle représentant la moitié du déplacement angulaire donné autour du premier axe (86ab, 88ab), de façon qu'ainsi les moyens d'alimentation (104, 102) opèrent un déplacement résultant suivant le premier sens, dans une relation synchronisée avec le mouvement alternatif du piston (20), et qu'alternativement, le moyen de compactage (104) et le moyen de bourrage (102) desdits moyens d'alimentation (104, 102) prénètrent dans le conduit d'alimentation (54) et se retirent de celui-ci; ledit moyen de compactage (104) étant apte à opérer pour compacter les produits de récolte dans le conduit d'alimentation (54), sensiblement au moment où le piston (20) se trouve positionné transversalement à l'orifice d'entrée de carter de ramasseuse-presse (70) et pendant que le moyen de bourrage (102) est en retrait par rapport au conduit d'alimentation (54), tandis que ledit moyen de bourrage (102) est apte à opérer pour bourrer une fournée de produits de récolte à travers l'orifice d'entrée (70) dans le carter de ramasseuse-presse (12), lorsque le piston (20) a dégagé ledit orifice d'entrée (70) et pendant que le moyen de compactage (104) est en retrait par rapport au conduit d'alimentation (54).

2. Ramasseuse-presse selon la revendication 1, caractérisée en ce que le moyen de compactage (104) et le moyen de bourrage (102) sont conçus pour, lorsqu'on les considère dans le premier sens, en partant du moyen de bourrage (102) vers moyen de compactage (104), définir entre eux un angle obtus, les trajectoires de déplacement (164, 162) respectives du moyen de compactage (104) et du moyen de bourrage (102) étant décalées l'une par rapport à l'autre.

3. Ramasseuse-presse selon la revendication 2, caractérisée en ce que l'angle obtus est compris dans la plage allant de 150° à 170°.

4. Ramasseuse-presse selon la revendication 2 ou 3, caractérisée en ce que les trajectoires de déplacement (164, 162) du moyen de compactage (104) et du moyen de bourrage (102) ont, dans l'ensemble, une configuration en forme de pomme.

5. Ramasseuse-presse selon l'une quelconque des revendications précédentes, caractérisée en ce que le moyen de compactage (104) et le moyen de bourrage (102) se présentent sous la forme de fourches de compactage et de bourrage, les fourches de bourrage (102) étant plus longues que les fourches de compactage (104).

6. Ramasseuse-presse selon l'une quelconque des revendications 2 à 5, caractérisée en ce qu'en cours de fonctionnement, seul le moyen de bourrage (102) pénètre dans le carter de ramasseuse-presse (12).

7. Ramasseuse-presse selon l'une quelconque des revendications 3 à 6, caractérisée en ce que les trajectoires de déplacement (164, 162) du moyen de compactage (104) et du moyen de bourrage (102) se croisent en un point (163) situé à proximité de l'ouverture de réception de produits de récolte (66) du conduit d'alimentation (54).

8. Ramasseuse-presse selon l'une quelconque des revendications précédentes, caractérisée en ce qu'en cours de fonctionnement, le moyen de bourrage (102) est apte à opérer pour compacter d'autres produits de récolte dans le conduit d'alimentation (54), en plus des produits de récolte précédemment compactés dans celui-ci par le moyen de compactage (104), et avant de bourrer les produits de récolte compactés dans le conduit d'alimentation (54) depuis ce dernier jusque dans le carter de ramasseuse-presse (12).

9. Ramasseuse-presse selon l'une quelconque des revendications précédentes, caractérisée en ce que les moyens de compactage et de bourrage (104, 102) servent également à précomprimer des produits de récolte dans le conduit d'alimentation (54).

10. Ramasseuse-presse selon l'une quelconque des revendications précédentes, caractérisée en ce que le carter de ramasseuse-presse (12) possède une paroi inférieure (13) dans laquelle est défini l'orifice d'entrée (70); le conduit d'alimentation (54) ayant une extrémité supérieure (68) orientée, d'une manière générale, vers le haut et en communication avec l'orifice d'entrée (70) dans le carter de ramasseuse-presse (12), et un ouverture de réception de produits de récolte inférieure (66) orientée, d'une manière générale, vers l'avant, tandis qu'un moyen de ramassage (72) est prévu à proximité de l'extrémité inférieure (66) du conduit d'alimentation (54) pour ramasser des produits de récolte depuis le sol et les acheminer en direction des moyens d'alimentation (104, 102); et caractérisée en ce que le conduit d'alimentation (54) présente, dans l'ensemble, une forme courbée d'une manière circulaire, le centre de courbure coïncidant avec le premier axe (86ab, 88ab) ou étant positionné à proximité de celui-ci, et en ce qu'en cours de fonctionnement, le moyen de compactage (104) et le moyen de bourrage (102) se déplacent alternativement à travers le conduit d'alimentation (54) dans le sens qui va de l'extrémité inférieure (66) vers l'extrémité supérieure (68).

11. Ramasseuse-presse selon la revendication 8, caractérisée en ce que des moyens formant vis transporteuses (82, 84) sont disposés sur les côtés du conduit d'alimentation (54), en vue de déplacer des produits de récolte en direction de l'ouverture de réception de produits de récolte inférieure (66) de celui-ci.

12. Ramasseuse-presse selon l'une quelconque des revendications précédentes, caractérisée en ce qu'elle comporte, en outre:—

deux ensembles d'arbres (86, 88) espacés transversalement l'un de l'autre et en alignement l'un avec l'autre, qui s'étendent coaxialement au premier axe (86ab, 88ab), et

des moyens formant manivelles (120, 122) respectivement accouplés, par l'une de leurs extrémités, avec chaque ensemble d'arbres (86, 88), au niveau de l'extrémité de celui-ci orientée vers l'ensemble d'arbres opposé (88, respectivement 86); lesdits moyens formant manivelles (120, 122) supportant, au niveau de leurs autres extrémités, le moyen de montage commun (106) destiné au moyen de compactage (104) et au moyen de bourrage (102), en vue d'un mouvement de rotation autour du second axe (106).

13. Ramasseuse-presse selon la revendication 12, caractérisée en ce que:—

le moyen sensiblement fixe (130) consiste en un premier pignon (130) assujetti d'une manière fixe au châssis (14);

les seconds moyens d'entraînement (128, 126) qui accouplent, en vue de leur entraînement, les moyens d'alimentation (104, 102) avec le moyen sensiblement fixe (130), consistent en un second pignon (126) assujetti d'une manière fixe au moyen de montage commun (106) et en une chaîne (128) qui s'étend, en vue de leur entraînement, autour des premier et second pignons (130, 126), le second pignon (126) ayant deux fois plus de dents que le premier pignon (130); et

les premiers moyens d'entraînement (34, 36, 136, 140, 138, 144, 146, 134) sont accouplés d'une manière fonctionnelle avec l'un (86) des ensembles d'arbres, en vue d'entraîner les moyens d'alimentation (104, 102) dans le premier sens autour du premier axe (86ab, 88ab).

14. Ramasseuse-presse selon la revendication 13, caractérisée en ce qu'un organe d'équilibrage (116), sensiblement en forme de U, est relié d'une manière fixe aux ensembles d'arbres (86, 88) en un point dans l'ensemble diamètralement opposé au moyen de montage commun (106), pour faire contrepoids à ce moyen de montage commun (106) ainsi qu'au moyen de compactage (104) et au moyen de bourrage (102) montés sur celui-ci.

15. Ramasseuse-presse selon la revendication 13 ou 14, comportant, en outre, un bras de manivelle (24) mobile en rotation et relié au piston (20) pour obliger celui-ci à opérer un mouvement alternatif dans le carter de ramasseuse-presse (12), dans laquelle les premiers moyens d'entraînement (34, 36, 136, 140, 138, 144, 146, 134) sont aptes à opérer pour faire tourner également ledit bras de manivelle (24), et caractérisée en ce que: lesdits premiers moyens d'entraînement (34, 36, 136, 138, 144, 146) sont également aptes à opérer pour animer les ensembles d'arbres (86, 88) d'un mouvement de rotation sur deux tours complets de 360° et pour obliger le moyen de compactage (104) et le moyen de bourrage (102) à effectuer un cycle complet sur leurs trajectoires de déplacement (164, 162) respectives, pendant que le bras de manivelle (24) effectue un tour complet de 360°.

16. Ramasseuse-presse selon l'une quelconque des revendications 12 à 15, lorsqu'elles sont annexées à la revendication 11, caractérisée en ce que les moyens formant vis transporteuses (82, 84) sont reliés aux ensembles d'arbres (86, 88) en vue d'une rotation en synchronisme avec ceux-ci.

*Fig. I*

Fig. 2

Fig. 3

Fig. 4   Fig. 5   Fig. 6   Fig. 7

Fig. 8   Fig. 9   Fig. 10   Fig. 11

0 148 537